# EUROPEAN PATENT APPLICATION

(11) **EP 0 822 203 A2**
(43) Date of publication of application: **04.02.1998**
(21) Application number: 97305439.8
(22) Date of filing: 21.07.1997
(51) Int. Cl.: C08F 6/14, C09D 5/02, B01D 61/00

(54) **The reduction of microfoam in spray applied thermoplastic coatings and coating composition therefor**

(30) Priority: 30.07.1996 US 22788
(71) Applicant: ROHM AND HAAS COMPANY, Philadelphia, Pennsylvania 19106-2399 (US)
(72) Inventor: Larson, Gary Robert, Hatfield, Pennsylvania 19440 (US); Gebhard, Matthew Stewart, New Britain, Pennsylvania 18901 (US)
(74) Representative: Buckley, Guy Julian

(57) **Abstract**

The present invention provides a method for reducing the level of microfoam produced by spray applied clear coatings. Coating compositions which produce reduced levels of microfoam when spray applied are also claimed.

## Description

This invention relates to the reduction of microfoam in spray applied clear coatings.

Thermoplastic emulsion polymer compositions frequently contain microfoam after they are applied to substrates by spraying techniques. Microfoam is gas-filled, substantially spherical occlusions in the dried film which are typically 10-20 micrometers in radius. These occlusions of gas typically are found in the polymeric composition after spray application to a substrate. Microfoam is particularly undesirable in clear or substantially unpigmented coatings or films because of the haze or opacity it creates. Microfoam remaining in a dried film detracts from the appearance of the film, particularly from the appearance of a clear, or unpigmented film.

Several patents have disclosed processes to improve the quality of dried coatings. U.S. Patent No. 3,033,811 discloses a process for coating substrates with a thermosetting mixture. An aqueous dispersion of a water insoluble copolymer was a component of the thermosetting mixture. The aqueous dispersion was deionized through dialysis, ion exchange resins, or precipitation of solids. The resultant coating was dried through heating at between 250°F and 350°F. The invention yielded improvements to adhesion, hardness, toughness, abrasion resistance, and water resistance.

U.S. Patent No. 5,334,655 discloses a method for reducing microfoam in a spray-applied clear waterborne polymeric composition. Certain emulsion-polymerized addition polymers with gel permeation chromatography ("GPC") molecular weights of less than 75,000, or certain multi-staged emulsion-polymerized addition polymers with GPC molecular weights of less than 200,000 were required to create a composition which provided reduced microfoam in a spray-applied clear waterborne polymeric composition.

Despite these disclosures, there still is a continuing need to provide improved methods of reducing microfoam in sprayed coatings.

According to a first aspect of the present invention, there is provided a method of reducing microfoam in thermoplastic, dried, clear coatings comprising
a) providing a thermoplastic emulsion polymer with a Tg of from -20°C to 150°C;
b) reducing the conductivity of the thermoplastic emulsion polymer to less than 4.50 milliMhos/centimeter ("mMhos/cm.");
c) spraying the thermoplastic emulsion polymer or coating composition on a substrate; and
d) drying the thermoplastic emulsion polymer or coating composition.

According to a second aspect of the present invention, there is provided a composition suitable for providing a thermoplastic, dried, clear coating with reduced microfoam including a thermoplastic emulsion polymer with a conductivity of less than 4.50 mMhos/cm.

Thermoplastic emulsion polymer herein is defined as compositions containing an emulsion-polymerized, water-insoluble addition polymer with a glass transition temperature ("Tg") of from -20 degrees centigrade ("°C") to 150°C as measured by differential scanning calorimetry (DSC). Preferred are emulsion-polymerized polymers with a glass transition temperature of from -10°C to 120°C. Most preferred are thermoplastic emulsion polymers with a glass transition temperature of from 0°C to 90°C.

The thermoplastic emulsion polymer may be prepared by the addition polymerization of at least one ethylenically unsaturated monomer such as, for example, acrylic ester monomers including methyl acrylate, ethyl acrylate, butyl acrylate, 2-ethylhexyl acrylate, decyl acrylate, methyl methacrylate, butyl methacrylate, hydroxyethyl methacrylate, and hydroxypropyl acrylate; acrylamide or substituted acrylamides; styrene or substituted styrenes; butadiene; vinyl acetate or other vinyl esters; vinyl monomers such as vinyl chloride, vinylidene chloride, N-vinyl pyrolidone; and acrylonitrile or methacrylonitrile. Low levels of copolymerized ethylenically unsaturated acid monomers such as, for example, 0.1%-7%, by weight based on the weight of the emulsion-polymerized polymer, acrylic acid, methacrylic acid, crotonic acid, phosphoethyl methacrylate, 2-acrylamido-2-methyl-1-propanesulfonic acid, sodium vinyl sulfonate, itaconic acid, fumaric acid, maleic acid, monomethyl itaconate, monomethyl fumarate, monobutyl fumarate, and maleic anhydride may be used. Preferred are acrylic polymers or acrylic copolymers with styrene. Preferred acrylic copolymers with styrene contain from 10% to 90% styrene based on the total weight of the polymer. The polymers may be single-stage or multi-stage polymers. The GPC molecular weight of the polymer is from 75,000 to 5,000,000.

The thermoplastic emulsion polymer may contain a crosslinking agent, such as, for example, a polyaziridine, polyisocyanate, polycarbodiimide, polyepoxide, polyaminoplast, polyalkoxy silane, polyoxazolidine, polyamine and a polyvalent metal compound; providing that the crosslinking agent does not inhibit film formation. Typically, from 0.05 weight percent to 30 weight percent of the crosslinking agent is used, based on the weight of the polymer solids.

The thermoplastic emulsion polymer may be blended with other polymers, such as, for example, a polyurethane, a polyester, an acrylic copolymer, a styrene/acrylic copolymer, or other polymers.

The emulsion polymerization techniques used to prepare single-stage emulsion polymers are well known in the art. See, for example, U.S. Patent No. 5,346,954. Multi-stage polymers are well known in the art and are disclosed, for example, in U.S. Patent No. 4,325,856, 4,654,397, and 4,814,373. Surfactants such as, for example, anionic and/or nonionic emulsifiers such as alkali or ammonium alkyl sulfates, alkyl sulfonic acids, fatty acids, and oxyethylated alkyl phenols may be used in this polymerization. The amount of surfactant used is usually 0.1% to 6% by weight, based on the weight of total monomer. Either thermal or redox initiation processes may be used. Conventional free radical initiators may be used such as, for example, hydrogen peroxide, t-butyl hydroperoxide, ammonium and alkali persulfates, typically at a level of 0.05% to 3% by weight, based on the weight of total monomer. Redox systems using the same initiators coupled with a suitable reductant such as, for example, isoascorbic acid and sodium bisulfite may be used at similar levels.

The solids content of the thermoplastic emulsion polymer is from 20% to 70% by weight. The viscosity of the thermoplastic emulsion polymer is from 50 centipoises ("cps") to 10,000 cps, as measured using a Brookfield viscometer (Model LVT using spindle #3 at 12 rotations per minute); the viscosities appropriate for different spraying methods vary considerably.

The conductivity of the thermoplastic emulsion polymer may be reduced through diafiltration, dialysis, ultrafiltration, or through contacting the thermoplastic emulsion polymer with ion exchange resins. A preferred method for reducing the conductivity of the thermoplastic emulsion polymer is to first reduce the conductivity through diafiltration and then further reduce the conductivity through ultrafiltration. The use of diafiltration followed by ultrafiltration has the added benefit of increasing the solids of the emulsion.

Ultrafiltration processes are known in the art, see for example U.S. Patent No. 4,397,969. Ultrafiltration uses the same system as diafiltration, however, deionized water is not added to make up for the water lost during filtration. In the diafiltration process, deionized water is added to dilute the emulsion polymer and to make up for water lost during the filtration process.

The conductivity of the emulsion polymer may be reduced by contacting ion exchange resins with the thermoplastic emulsion polymer. Typically, both a cation and an anion exchange resin will be contacted with the thermoplastic emulsion polymer. The ion exchange resins are typically cross-linked styrene polymers with functional groups such as, for example, sulfonamide, trialkylamino, tetraalkyl ammonium, carboxyl, carboxylate, sulfonic, sulfonate, hydroxyalkyl ammonium, iminodiacetate, amine oxide, phosphonate, and others known in the art. The preparation of ion exchange resins is well known in the art, see for example, U.S. Patent No. 4,283,499. The ion exchange resins may be left in the thermoplastic emulsion polymer or removed by conventional techniques such as, for example, filtration through cheese cloth. The thermoplastic emulsion polymer may also be reduced in conductivity by passing the sample through a column of ion exchange resins. The column may contain a mixture of anion and cation exchange resins, or there may be a series of columns; one containing an anion exchange resin, the other containing a cation exchange resin.

The preferred conductivity of the thermoplastic emulsion polymer after diafiltration, dialysis, ultrafiltration, or contacting the thermoplastic emulsion polymer with ion exchange resins is from 4.50 mMhos/cm. to 0.1 mMhos/cm. More preferred is a thermoplastic emulsion polymer with a conductivity after diafiltration, dialysis, ultrafiltration, or contacting the thermoplastic emulsion polymer with ion exchange resins of from 4.0 mMhos/cm. to 1.0 mMhos/cm. Most preferred is a thermoplastic emulsion polymer with a conductivity after diafiltration, dialysis, ultrafiltration, or contacting the thermoplastic emulsion polymer with ion exchange resins of from 3.5 mMhos/cm. to 2.0 mMhos/cm. If the conductivity is reduced too low, the viscosity of the thermoplastic emulsion polymer may rise significantly. If the viscosity of the thermoplastic emulsion polymer rises too high, spray application of the thermoplastic emulsion polymer may become difficult or impossible.

The thermoplastic emulsion polymer may optionally be formulated into a coating composition. Ideally, the coating composition contains no ingredients which cause substantial opacity in the dried coating. In order to retain its opacity, the applied dry film thickness is typically from 5 micrometers ("um") to 250 um. The dried coating may be applied as one coat or as multiple coats with drying between coatings. The thermoplastic emulsion polymer coating composition may contain, in addition to the emulsion polymerized thermoplastic polymer, conventional components such as, for example, emulsifiers, substantially transparent pigments and fillers, dispersants, coalescing agents, curing agents, thickeners, humectants, wetting agents, biocides, plasticizers, antifoaming agents, colorants, waxes, and antioxidants. Conventional components may be used provided that they don't raise the conductivity of the emulsion, of which the conductivity had previously been reduced through diafiltration, dialysis, ultrafiltration, or contacting the thermoplastic emulsion polymer with ion exchange resins, substantially above 4.50 mMhos/cm.

Those with skill in the art will appreciate that the use of diafiltration, dialysis, ultrafiltration or contact with ion exchange resins will remove components used to formulate a coating composition from the thermoplastic emulsion polymer. Therefore, it is highly desired that diafiltration, dialysis, ultrafiltration, or contact with an ion exchange resin be conducted before the addition of the coating composition additives. However, it is understood that the use of any of the above methods to reduce the conductivity of a previously formulated coating composition may be used to reduce the level of microfoam in the spray-applied coating composition.

Thermoplastic emulsion polymer compositions are frequently applied on substrates by spraying techniques. Some of the common spraying techniques used are, for example, air spray, airless spray, air-assisted airless spray, disc and bell spray, and high volume low pressure spray. In air spray, compressed air is critical to atomize the thermoplastic emulsion polymer and to assist in conveying the droplets to the substrate. In airless, disc, and bell spray techniques, the thermoplastic emulsion polymer is atomized by mechanical means and the droplets are suspended in air upon formation. Air-assisted airless spray is a hybrid of the two spray methods described above wherein air is used to convey the droplets which are formed mechanically; and high volume low pressure spray is another commonly recognized variant of air spray.

The spray-applied thermoplastic emulsion polymer is applied to substrates such as, for example, metal, wood, and plastic, using a spraying method. The thermoplastic emulsion polymer may be applied to wood such as, for example, wood, sealed wood, particle board treated with a UV cured filler, primer, sealer, painted wood, and previously coated wood; or to metal such as, for example, metal, treated metal, metal coated with an electrodeposited primer, and previously painted metal; or to plastic such as, for example, plastic, plastic alloys, and reinforced plastic (such as reaction injection molding substrate).

After application to the substrate, the thermoplastic emulsion polymer may be dried at ambient conditions or by conventional techniques, such as, but not limited to, heating at from 100°F to 175°F; forced air treatment, forced hot air treatment; and storage in infra red ovens, ultra violet ovens, and microwave ovens.

The following examples are intended to illustrate the method for reducing the amount of microfoam in a spray applied polymeric composition. The following abbreviations are used herewith:
g = grams, RH = relative humidity, mm = millimeters, cm = centimeter, mm² = square millimeters, °F = degrees Fahrenheit, and psi = pounds per square inch.

### Example 1 - The Use Of Ion Exchange Resins To Reduce The Conductivity Of An Acrylic Thermoplastic Emulsion Polymer

Seven samples were made with Neocryl™ XA-6051 acrylic thermoplastic emulsion polymer (Zeneca Resins). The first 3 samples were made to determine the effect of ion exchange resin concentration on the conductivity of the emulsion and microfoam development in the spray applied thermoplastic emulsion polymer.

Sample 1 - Neocryl™ XA-6051 (300 g) of acrylic emulsion and 6.3 g of Amberlite™ IRN 150 (Rohm and Haas Company) were added to a container. The sample was stirred for 30 minutes with a conventional lab stirrer. After 30 minutes the emulsion was removed from the beads by filtering through cheese cloth.

Sample 2 - Neocryl™ XA-6051 (300 g) of acrylic emulsion and 12.6 g of Amberlite™ IRN 150 were added to a container. The sample was stirred for 30 minutes with a conventional lab stirrer. After 30 minutes the emulsion was removed from the beads by filtering through cheese cloth.

Sample 3 - Neocryl™ XA-6051 (300 g) of acrylic emulsion and 25.2 g of Amberlite™ IRN 150 were added to a container. The sample was stirred for 30 minutes with a conventional lab stirrer. After 30 minutes the emulsion was removed from the beads by filtering through cheese cloth.

### Example 2 - The Use Of Diafiltration And Ultrafiltration To Reduce The Conductivity Of An Acrylic Thermoplastic Emulsion Polymer

The next four samples of Neocryl™ XA-6051 were treated with diafiltration to lower the conductivity of the samples thereby reducing the level of microfoam in spray applied coatings. Varying levels of ammonium carbonate were added to samples 5, 6, and 7 to determine the effect of higher emulsion conductivity values on the microfoam development in the spray applied thermoplastic emulsion polymer.

Sample 4 was prepared by mixing 2,968 g of as supplied acrylic emulsion with 2,968 g of deionized water. This solution was recirculated across the microfiltration membrane using a microfiltration unit. The microfiltration unit was an Industrial Maximate manufactured by Filtron. The main feed tank was a 5 gallon polypropylene tank. The recirculating pump was an M-1 diaphragm pump manufactured by Wildon. An in-line water filter was positioned after the pump. The microfiltration membrane was an Omega series modified polyether sulfone. The molecular weight cut-off for the membrane was about 30,000. The channel size of the membrane was 40 mil. The solution being filtered was recirculated from the main feed tank to the microfiltration membrane and back to the main feed tank by the pump. A 2.5 gallon polypropylene carboy was used to collect the permeate as it was produced on the other side of the microfiltration membrane. A feed pump manufactured by Fluid Metering Pump Inc. was used to add deionized water to the main feed tank to maintain the fluid volume in the tank during filtration. During the filtration process 11,872 g of deionized water was added to the main feed tank at a rate that equaled the rate of permeate that was collected on the other side of the microfiltration membrane. After the 11,872 g of deionized water was added and 11,872 g of permeate was collected, the solution was allowed to recirculate in the microfiltration unit until another 3,618 g of permeate was collected. The sample was then drained from the unit. An additional 200 g of deionized water was added to the unit and recirculated. After 7 minutes this sample was drained from the unit and blended with the rest of the sample. The conductivity of the final sample was measured and is found in Table 1.

Sample 5 was prepared by mixing 150 g of sample 4 with 1.97 g of a 20% aqueous solution of ammonium carbonate in a container. The sample was stirred for 5 minutes with a conventional lab stirrer. The conductivity of the final sample was measured and is found in Table 1.

Sample 6 was prepared by mixing 150 g of sample 4 with 0.99 g of a 20% aqueous solution of ammonium carbonate in a container. The sample was stirred for 5 minutes with a conventional lab stirrer. The conductivity of the final sample was measured and is found in Table 1.

Sample 7 was prepared by mixing 150 g of sample 4 with 0.49 g of a 20% aqueous solution of ammonium carbonate in a container. The sample was stirred for 5 minutes with a conventional lab stirrer. The conductivity of the final sample was measured and is found in Table 1.

Neocryl™ XA-6051 acrylic thermoplastic emulsion polymer was used as a control.

The conductivity of samples 1 through 7 and the control was determined using a YSI Model 32 Conductivity Meter, manufactured by Yellow Springs Instrument Co Inc. (Scientific Division). The conductivity meter was calibrated using a standard KCl solution (10,000 micromho/cm). The results of the conductivity measurements are found in Table 1.

**Table 1**

| Sample | Conductivity (mMhos/cm) |
|---|---|
| 1 | 4.67 |
| 2 | 3.21 |
| 3 | 2.03 |
| 4 | 2.75 |
| 5 | 4.74 |
| 6 | 3.79 |
| 7 | 3.10 |
| Control | 6.58 |

### Example 3 - The Effect Of Reduced Conductivity On Microfoam In Sprayed Coatings

Samples 1 through 7 and the control were tested for the effect of reduced conductivity on microfoam in sprayed coatings. Samples 8-14 and a control were created by mixing 100 g of the previously described samples with a cosolvent mixture containing 12 parts ethylene glycol monobutyl ether and 1 part dibutyl phthalate and water. Samples 8-14 and a control were prepared according to Table 2.

**Table 2**

| Sample | Sample | g Of Cosolvent | g Of Water |
|---|---|---|---|
| 8 | 1 | 14.1 | 25 |
| 9 | 2 | 14.0 | 25 |
| 10 | 3 | 13.8 | 20 |
| 11 | 4 | 14.1 | 25 |
| 12 | 5 | 14.1 | 3.4 |
| 13 | 6 | 16.9 | 35.6 |
| 14 | 7 | 14.1 | 28.1 |
| Control | Control | 14.3 | 25 |

The samples were spray-applied using a conventional suction-feed spray gun (DeVilbiss MBC) with an EX tip and a #30 spray nozzle. The gas pressure used to spray the samples was 45 psi. The samples were applied over wood panels. Two coats were applied with 20 minute drying time between the coats. The samples were applied at 4 wet mils and were sprayed and dried at 90° F/25%RH. The bubble density was evaluated using a 70X microscope and counting the number of bubbles per square mm in the final dried film. The results are shown in Table 3.

**Table 3**

| | Conductivity | Microfoam |
|---|---|---|
| Sample | (mMhos/cm) | (Bubbles/mm²) |
| 8 | 4.67 | 19.5 |
| 9 | 3.21 | 5 |
| 10 | 2.03 | 1 |
| 11 | 2.75 | 2.5 |
| 12 | 4.74 | 13.5 |
| 13 | 3.79 | 0.5 |
| 14 | 3.10 | 4.25 |
| Control | 6.58 | 24 |

The above data clearly demonstrates that microfoam in sprayed, dried coatings is surprisingly reduced by reducing the conductivity of the emulsion polymer prior to spraying. Microfoam is reduced from 24 bubbles/mm² to 5 bubbles/mm² when the conductivity is reduced from 6.58 mMhos/cm to 3.21 mMhos/cm.

## Claims

1. A method of reducing microfoam in thermoplastic, dry, clear coatings comprising
a) providing a thermoplastic emulsion polymer with a Tg of from -20°C to 150°C;
b) reducing the conductivity of said thermoplastic emulsion polymer to less than 4.50 milliMhos/centimeter;
c) spraying said thermoplastic emulsion polymer on a substrate; and
d) drying said thermoplastic emulsion polymer.

2. The method according to claim 1 wherein reducing the conductivity of said emulsion polymer is accomplished by diafiltration; dialysis; ultrafiltration; or contacting said emulsion polymer with ion exchange resins.

3. The method according to claim 2 wherein said emulsion polymer is separated from said ion exchange resin after reducing said conductivity.

4. The method according to claim 2 wherein the conductivity of said emulsion polymer is reduced via diafiltration followed by ultrafiltration.

5. The method according to claim 1 wherein said conductivity of said emulsion polymer is reduced to from 4.0 milliMhos/centimeter to 1.0 milliMhos/centimeter.

6. The method according to claim 1 wherein said thermoplastic emulsion polymer is formulated into a coating composition prior to spraying on said substrate.

7. A composition suitable for providing a clear thermoplastic coating with reduced microfoam comprising a thermoplastic emulsion polymer with a conductivity of less than 4.50 milliMhos/centimeter.

8. The composition according to claim 6 wherein said emulsion polymer has a conductivity of from 4.0 milliMhos/centimeter to 1.0 milliMhos/centimeter.

9. The composition according to claim 6 wherein said emulsion polymer has a Tg of from 0°C to 90°C.
